# EUROPEAN PATENT APPLICATION

(11) **EP 2 148 088 A1**
(43) Date of publication of application: **27.01.2010**
(21) Application number: 08013206.1
(22) Date of filing: 22.07.2008
(51) Int. Cl.: F03D 7/02

(54) **Method and arrangement to adjust the pitch of wind turbine blades**

(71) Applicant: Siemens Aktiengesellschaft, 80333 München (DE)
(72) Inventor: Nielsen, Daniel, 2500 Valby (DK)

(57) **Abstract**

A method and an arrangement to adjust a pitch of blades (3) being used by a wind-turbine (1,2). Pressure is measured at a pressure-side and at a suction side of a blade (3). The measured pressures are used to determine an actual angle-of-attack (α) of the wind acting on the blade (3). The angle-of-attack (α) is used to adjust the pitch of the blade (3) to optimize a performance of the wind-turbine (1,2).

## Description

The invention relates to a method to control a pitch of blades being used by a wind-turbine.

The wind-load acting on a pitch controlled wind-turbine below a rated power depends on an ideal pitch-strategy. Also the power-production of a pitch controlled wind-turbine below rated power depends on the optimal pitch-strategy, too. The blades of the wind-turbine are designed for this pitch-strategy, while the profile of the blade is designed for an ideal Cp-value, while Cp is a "power coefficient". This is the ratio of the power extracted from the wind to the total power available in the wind. The theoretical maximum of Cp for an ideal wind turbine is the "Betz limit" of 16/27 which is about 59%.

GB 2067247A describes a pitch-control, where pressure probes, which are mounted at the surface of rotor-blades are used to adjust the blade-pitch. The pressure probes are mounted near the tip-portions of the blades.

A pitch regulation according to the state of the art generally assumes clean rotor blades and determines the pitch-angle based on the produced power of the wind turbine.

If a local wind-shear is known, it is possible, to optimize an azimuthally dependent pitch controlling scheme to increase the wind-turbine efficiency with respect to loads and power.

So this kind of regulation has to rely on the assumption that the wind-shear is known. The regulation fails if the assumption regarding the wind-shear is wrong.

The wind-shear is dependent on the surroundings of the wind-turbine and changes over time, too. So the assumption of a certain wind-shear leads to wrong results.

It is aim of the invention, to provide an improved method and an arrangement to control or regulate a pitch of wind-turbine-blades.

This aim is solved by the features of claim 1 and claim 5. Preferred embodiments of the invention are described within the dependent claims.

According to the invention a pitch of blades, which are used by a wind-turbine, is adjusted. Pressure is measured at a pressure-side and at a suction side of the blade. The measured pressures are used to determine an actual angle-of-attack of the wind, which is acting on the blade. The angle-of-attack is used to adjust the pitch of the blade to optimize a performance of the wind-turbine.

The inventive pitch-control is based at a determination of a local angle-of-attack. Due to the stochastic nature of inflow-conditions an actual wind-shear acting on the blades is unknown, but by tracking the angle-of-attack over a sweeping-area of the wind-turbine-blade it is possible to determine the actual wind-shear profile.

This information about the wind-shear is used as additional input of a wind-turbine controller. This controller is now able to optimise the pitch and the yaw of the blades, leading to an improved power-production of the wind-turbine.

The improved pitch-control is also based on the detection of an air-stall at the blades, too, in a preferred embodiment.

"Air stall" means that air, which is acting on the blade, breaks-off at certain areas of the blade. This could occur because of environmental conditions like turbulence, dirt, water, ice, etc.

So if the beginning of an air-stall is detected, this information is used additionally to optimise the pitch and the yaw of the blades by the controller.

So the controller gets further useful information to keep the blades away from stalling leading to an optimized power production, too.

In a preferred embodiment an additional sensor is used, which indicates if the blades are dirty or covered with salt, etc. This additional information is considered at the pitch-control, because dirt, salt, etc., influences the air-stall and the angle of attack, too.

This sensor could be a sensor which is detecting an electrical conductivity of a test-arrangement. This electrical conductivity is going to change, if it is covered with dirt or salt, etc.

According to the invention there are pressure sensors which are located on the surface of an airfoil or blade. With these sensors it is possible to detect a local angle-of-attack of the air, which is acting on the blade.

It is also possible to detect an air-stall which occurs on a part of a blade.

Because of this additional knowledge it is possible, to scan an azimuthally velocity field, so a wind-shear can be estimated and a corresponding pitch controlling scheme can be utilized.

The pressure sensors are placed at a suction-side and on a pressure-side on a front-half of the airfoil-profile of the blade.

Based on the pressure-signals and based on the knowledge of a rotational speed of the rotor of the wind-turbine it is possible, to determine the actual angle-of-attack. Furthermore it is possible to detect, if the airfoil is in stall or close to stall.

The invention is shown in more detail by help of the following figures.
- FIG 1: shows positions of pressure sensors according to the invention,
- FIG 2: shows an angle-of-attack α to be detected and used ac- cording to the invention,
- FIG 3: shows a linear relation between the detected pressure and the angle-of-attack according to the invention,
- FIG 4: shows an airfoil profile with an air-stall,
- FIG 5: shows in a first example possible positions of pressure sensors according to the invention, and
- FIG 6: shows in a second example possible positions of pres- sure sensors according to the invention.

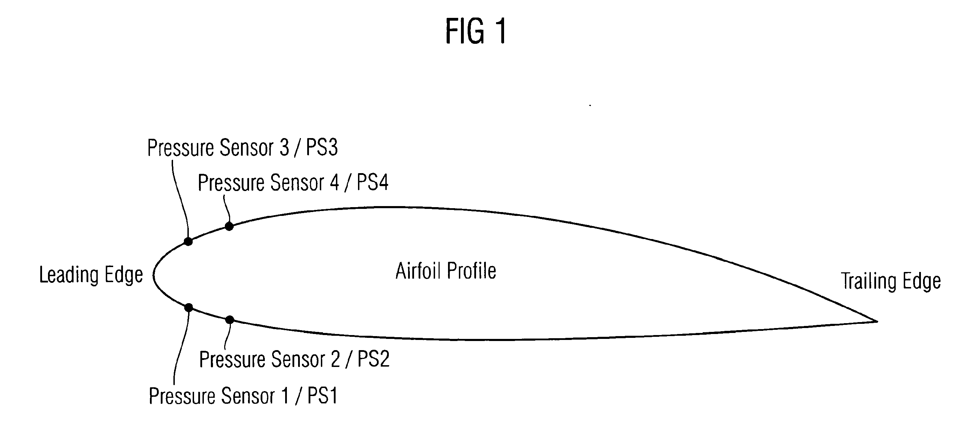

FIG 1 shows positions of four pressure sensors PS1 to PS4 according to the invention.

The blade is shown as an airfoil profile with a leading edge on a first side and a trailing edge at a second side. The pressure sensors PS1 to PS4 are located near to the leading edge.

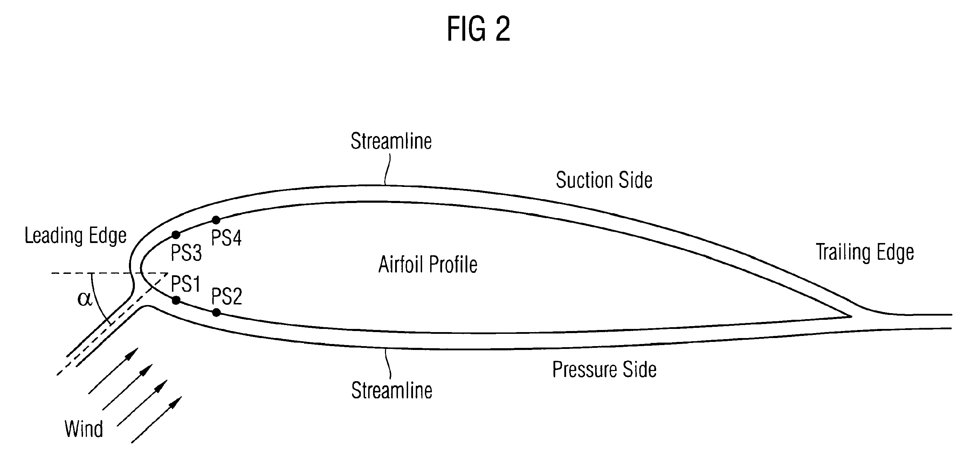

FIG 2 shows an angle-of-attack α to be detected and used according to the invention.

Referring to FIG 1 there are four pressure sensors PS1 to PS4 located near the leading edge of the blade.

Wind is acting on the airfoil profile, so lets assume that because of this the pressure sensors PS1 and PS2 are located on a pressure-side. Accordingly the pressure sensors PS3 and PS4 are located on a suction-side.

The pressure sensors PS1 and PS2 will detect a higher pressure than it will be detected by the pressure sensors PS3, PS4.

So it is possible to determine pressure differences between the pressure-side and the suction-side and to use these values to determine the angle-of-attack α of the wind, acting on the blade.

The shape of a streamline of the wind acting on the blade is marked by a line in this figure.

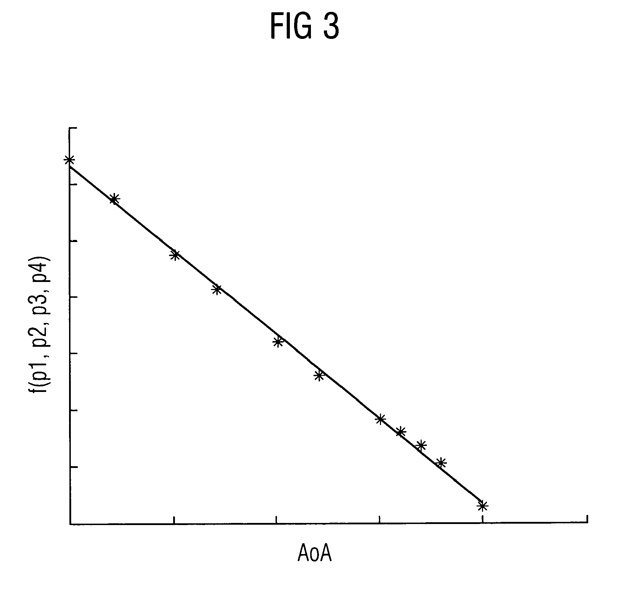

FIG 3 shows a linear relation between pressures, detected by the pressure-sensors PS1 to PS4, and the angle-of-attack α.

The horizontal axis shows the angle-of-attack AoA while the vertical axis shows a function f of the measured pressures.

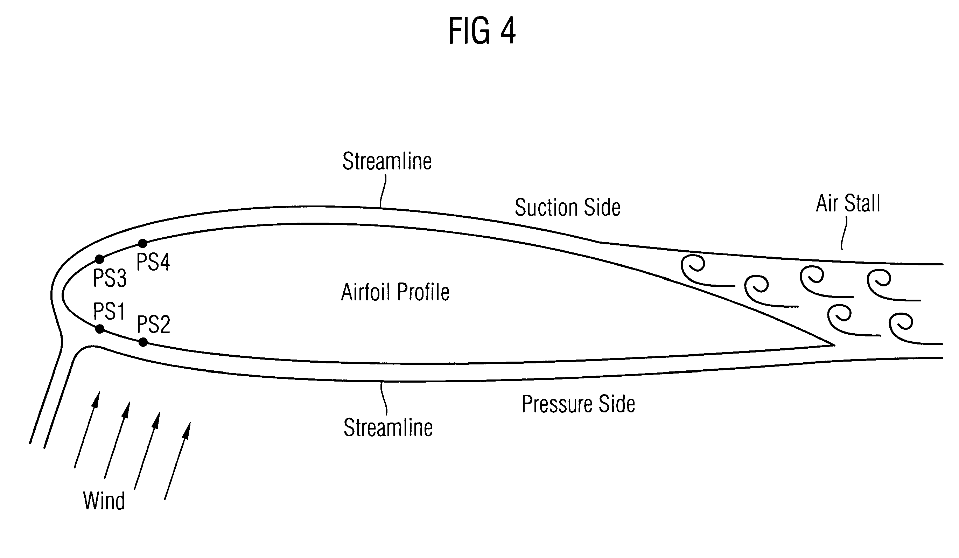

FIG 4 shows an airfoil profile of a blade with an air-stall with reference to FIG 1 and FIG 2.

Because of the air-stall the pressure which is detected on the suction-side of the airfoil, is dramatically affected, while the pressure which is detected on the pressure-side of the airfoil is largely unaffected.

This affection can be easily seen by the shape of the streamline of the wind compared with the shape of the streamline shown in FIG 2.

This characteristic behaviour of the pressures can be used to detect stall and near-stall situations of the blade.

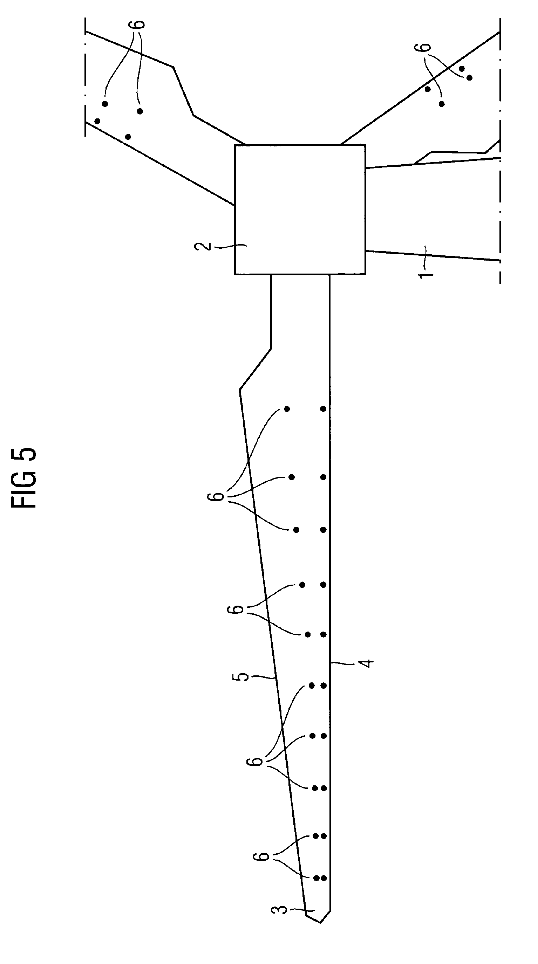

FIG 5 shows in a first example possible positions of pressure sensors according to the invention.

In this case the blades of the wind-turbine are looking upwind, so there is a back-view of a nacelle carrying the blades.

A wind-turbine-tower 1 carries a nacelle 2, while the nacelle 2 carries typically three blades 3. By help of a single blade 3 a leading edge 4 and a trailing edge 5 is shown.

Near the leading edge 4 of the blade 3 a number of pressure sensors 6 are located according to the invention.

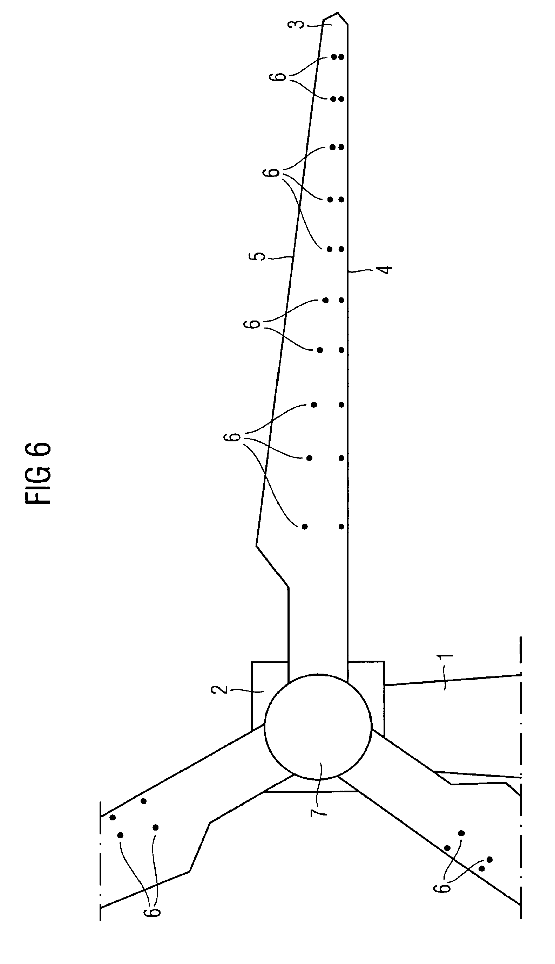

FIG 6 shows in a second example possible positions of pressure sensors according to the invention.

In this case the blades of the wind-turbine are looking downwind, so there is a front-view of a nacelle carrying the blades. This view is marked by a spinner 7.

A wind-turbine-tower 1 carries a nacelle 2, while the nacelle 2 carries typically three blades 3. By help of a single blade 3 a leading edge 4 and a trailing edge 5 is shown.

Near the leading edge 4 of the blade 3 a number of pressure sensors 6 are located according to the invention.

## Claims

1. Method to adjust a pitch of blades, which are used by a wind-turbine,
- where pressure is measured at a pressure-side and at a suction side of a blade,
- where the measured pressures are used to determine an actual angle-of-attack of the wind, which is acting on the blade,
- where the angle-of-attack is used to adjust the pitch of the blade to optimize a performance of the wind-turbine.

2. Method according to claim 1,
- where the measured pressures are used to detect a stall or a near-stall situation at the blade, and
- where the detected situation is used additionally to adjust the pitch of the blade.

3. Method according to claim 1 or 2, where the optimization is done to adjust an output-power of the wind-turbine or to adjust the wind-load acting on the blades of the wind-turbine.

4. Method according to one of the preceding claims,
- where dirt or salt covering the blades by parts is detected as a situation by a sensor, and
- where the detected situation is used additionally to adjust the pitch of the blade.

5. Arrangement to adjust a pitch of blades (3) to execute the method according to one of the preceding claims,
- with a blade (3) of a wind-turbine (1, 2), which is pitch-controlled to optimize a performance of the wind-turbine (1, 2),
- with a pitch-control, which is acting on the blade (3) for optimization,
- where the blade (3) shows a number (6) of pressure-sensors (PS1, ..., PS4), which are used to measure the pressure at a pressure-side and at a suction-side of the blade (3),
- whereas the measured pressures are used at the pitch-control to determine an actual angle-of-attack (α) of the wind acting on the blade (3) and whereas the angle-of-attack (α) is used to adjust the pitch of the blade (3).

6. Arrangement according to claim 5, where the pressure-sensors (PS1, ..., PS4) are located along a leading edge (4) of the blade (3) to detect the pressure at the pressure-side and at the suction-side of the blade (3).
